# EUROPEAN PATENT SPECIFICATION

(11) **EP 3 089 141 B1**
(45) Date of publication and mention of the grant of the patent: **30.06.2021**
(21) Application number: 14874333.9
(22) Date of filing: 24.12.2014
(51) Int. Cl.: G06F 1/16, G09F 9/00, G02F 1/1333, G06F 1/20, H04M 1/22, H04M 1/02

(54) **ELECTRONIC DEVICE AND LIGHT-TRANSMITTING COVER SUBSTRATE FOR ELECTRONIC DEVICE**
ELEKTRONISCHE VORRICHTUNG UND LICHTDURCHLÄSSIGES ABDECKSUBSTRAT FÜR EINE ELEKTRONISCHE VORRICHTUNG
DISPOSITIF ÉLECTRONIQUE ET SUBSTRAT DE RECOUVREMENT TRANSMETTANT LA LUMIÈRE POUR DISPOSITIF ÉLECTRONIQUE

(30) Priority: 24.12.2013 JP 2013264784
(43) Date of publication of application: 02.11.2016
(73) Proprietor: Kyocera Corporation, Kyoto-shi, Kyoto 612-8501 (JP)
(72) Inventor: UMEHARA, Motohiro, Kyoto-shi Kyoto 612-8501 (JP); TSUBOKURA, Satoru, Kyoto-shi Kyoto 612-8501 (JP)
(74) Representative: Viering, Jentschura & Partner mbB Patent- und Rechtsanwälte
(86) International application number: PCT/JP2014/084176
(87) International publication number: WO 2015/098976

(56) References cited:
- WO-A1-2008/093704
- WO-A1-2013/118769
- WO-A1-2013/179629
- WO-A1-2013/180155
- JP-A- H0 883 802
- JP-A- 2002 091 329
- JP-A- 2002 201 096
- JP-A- 2002 333 502
- JP-A- 2008 111 984
- JP-A- 2013 255 212
- US-A1- 2013 002 133
- US-A1- 2013 321 321
- Jason D. O'grady: "Curved glass is more than a marketing gimmick | ZDNet", , 12 November 2013 (2013-11-12), XP055391302, Retrieved from the Internet: URL:http://www.zdnet.com/article/curved-gl ass-is-more-than-a-marketing-gimmick/ [retrieved on 2017-07-17]
- CURIOTTO S ET AL: "Surface morphology and composition of c-, a- and m-sapphire surfaces in O"2 and H"2 environments", SURFACE SCIENCE, NORTH-HOLLAND, AMSTERDAM, NL, vol. 603, no. 17, 1 September 2009 (2009-09-01), pages 2688-2697, XP026499317, ISSN: 0039-6028, DOI: 10.1016/J.SUSC.2009.07.004 [retrieved on 2009-07-10]
- None

## Description

### Technical Field

The present invention relates to an electronic apparatus and a light-transmissive cover plate for electronic apparatus

### Background Art

In the related art, an electronic apparatus in which a plurality of functional units such as a wireless communication unit and an image display device are housed in a case is used. Recently, a portable electronic apparatus such as a so-called smart phone terminal or a tablet terminal that displays a relatively large image and includes an input device such as a touch panel has begun to rapidly spread. For example, PTL1 discloses a technology related to such a smart phone terminal. For example, so-called strengthened glass made of aluminosilicate glass or the like or a case member made of a resin material is used for an exterior body of the portable electronic apparatus.

### Citation List

### Patent Literature

PTL 1: Japanese Unexamined Patent Application Publication No. 2011-61316

### Non-Patent Literature

NPTL 1: Jason D. O'grady: "Curved glass is more than a marketing gimmick | ZDNet", 12 November 2013(2013-11-12), XP05391302
NPTL 2: CURIOTTO S ET AL: "Surface morphology and composition of c-, a- and m- sapphire surfaces in O"2 and H"2 environments", SURFACE SCIENCE, NORTH-HOLLAND, AMSTERDAM, NL, vol. 603, no. 17, 1 September 2009 (2009-09-01), pages 2688-2697, XP026499317, ISSN: 0039-6028, DOI: 10.1016/J. SUSC. 2009.07.004

NPTL1 discloses a switch from Gorilla Glass to sapphire with respect to glass displays in consumer gadgets (cf. page 2) .

NPTL2 discloses that at high temperature sapphire surfaces can adopt various shapes by formation of terraces and steps and/or by micro-faceting (cf. Section 1).

JP H0883802 A discloses a method for heat treatment of a sapphire single-crystal substrate, the method forming a flat substrate surface consisting of a terrace surface corresponding to the crystal orientation.

### Summary of Invention

### Technical Problem

It is necessary for the light-transmissive cover plate to be hardly broken when an impact is applied from the outside, have high heat dissipation, and easily release heat emitted from an internal electronic circuit or the like included in the electronic apparatus to the outside. However, the light-transmissive cover plate satisfying all the above-described characteristics at a high level has not been obtained yet.

### Solution to Problem

The present invention provides a light-transmissive cover plate according to claim 1 and an electronic apparatus according to claim 4. Further embodiments of the present invention are described in the dependent claims.

### Advantageous Effects of Invention

According to the present invention, since the light-transmissive cover plate is hardly broken when an impact is applied from the outside and has high heat dissipation, the heat emitted from an electronic circuit or the like can be efficiently released to the outside.

### BRIEF DESCRIPTION OF THE DRAWINGS

Fig. 1A is a perspective view illustrating the external appearance of an electronic apparatus and Fig. 1B is a perspective view illustrating a light-transmissive cover plate included in the electronic apparatus illustrated in Fig. 1A;
Fig. 2 is a front view illustrating the external appearance of the electronic apparatus;
Fig. 3 is a rear view illustrating the external appearance of the electronic apparatus;
Fig. 4 is a cross-sectional view illustrating the electronic apparatus;
Fig. 5A is a conceptual view describing an inclination direction of a second main surface of a light-transmissive cover plate, Fig. 5B is a perspective view schematically illustrating the second main surface by enlarging a portion thereof, and Fig. 5C is a cross-sectional view illustrating the light-transmissive cover plate;
Fig. 6 is a block diagram illustrating an electronic configuration of the electronic apparatus;
Figs. 7 is a surface profiles of the respective light-transmissive cover plates;
Fig. 8 is a plan view illustrating a piezoelectric vibrating element;
Fig. 9 is a side view illustrating the piezoelectric vibrating element;
Fig. 10 is a side view illustrating a state of the piezoelectric vibrating element being bent;
Fig. 11 is a side view illustrating a state of the piezoelectric vibrating element being bent;
Fig. 12 is a plan view illustrating the light-transmissive cover plate; and
Fig. 13 is a view for describing an air conduction sound and a conduction sound.

### DESCRIPTION OF EMBODIMENTS

Hereinafter, an embodiment of the present invention will be described with reference to the accompanying drawings.

### <External appearance of electronic apparatus>

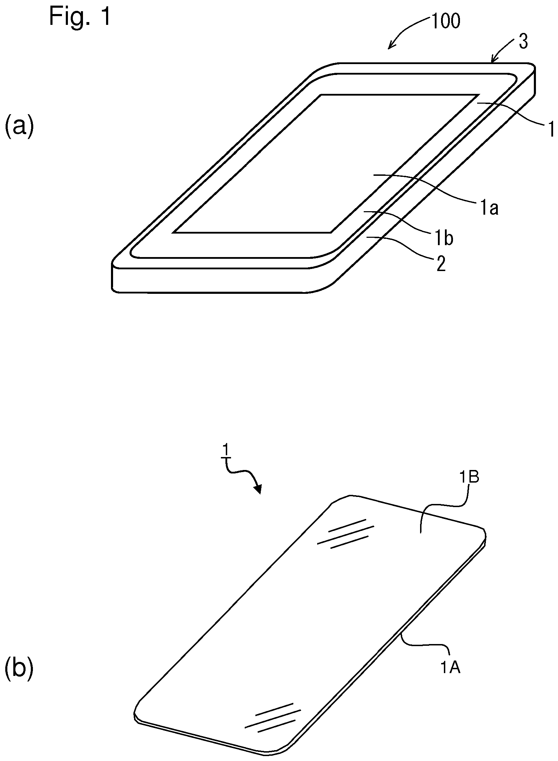

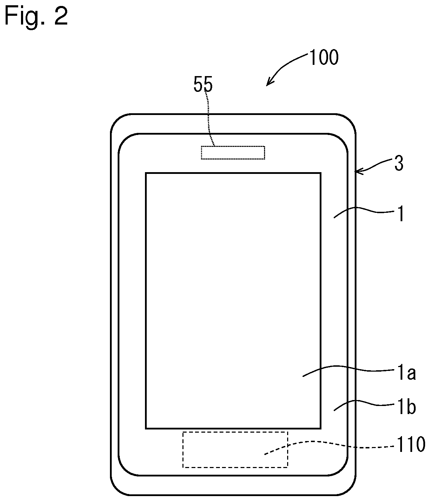

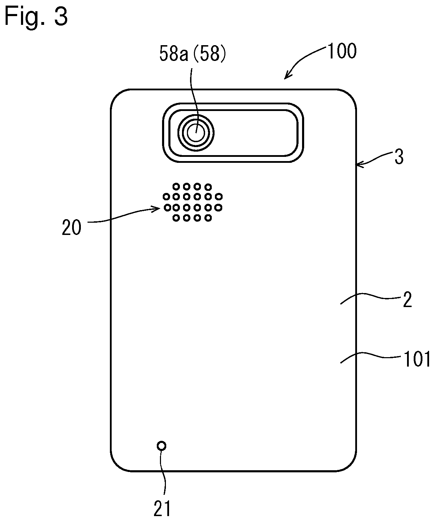

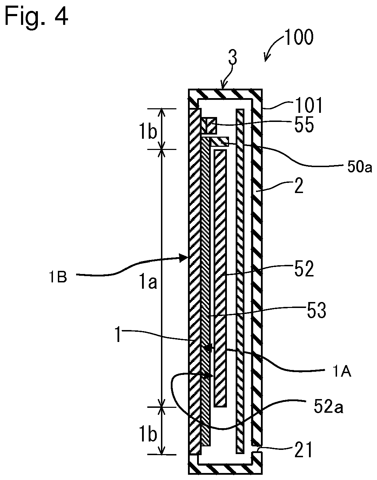

Fig. 1A is a perspective view schematically illustrating an electronic apparatus 100 which is an embodiment of the electronic apparatus of the present invention and Fig. 1B is a perspective view schematically illustrating a light-transmissive cover plate 1 which is included in the electronic apparatus illustrated in Fig. 1A and is an embodiment of the light-transmissive cover plate of the present invention. In addition, Fig. 2 is a front view illustrating the electronic apparatus 100 and Fig. 3 is a rear view illustrating the electronic apparatus 100. The electronic apparatus 100 according to the present embodiment is, for example, a mobile phone. Further, Fig. 4 is a cross-sectional view schematically illustrating the electronic apparatus 100.

As shown in Figs. 1A to 4, the electronic apparatus 100 includes an image display device 52 including the light-transmissive cover plate 1, a casing 2, and an image display surface 52a. The light-transmissive cover plate 1 is a substrate having an approximate rectangular shape in a plan view. An apparatus case 3 is configured by combining the light-transmissive cover plate 1 and the casing 2. The light-transmissive cover plate 1 includes a first main surface 1A facing the image display surface 52a and a second main surface 1B arranged on the opposite side of the first main surface 1A. The light-transmissive cover plate 1 is provided with a display portion 1a on which various pieces of information such as characters, symbols, and drawings are displayed. For example, the display portion 1a has a rectangular shape in a plan view. A peripheral edge 1b which surrounds the display portion 1a in the light-transmissive cover plate 1 becomes black by a film or the like being attached thereto and is a non-display portion on which the information is not displayed. A touch panel 53 described below is attached to an inner principal surface of the light-transmissive cover plate 1 and a user can give various instructions with respect to the electronic apparatus 100 by operating the display portion 1a of the second main surface 1B of the light-transmissive cover plate 1 with a finger or the like.

In the claimed invention, all of the light-transmissive cover plate 1 is made of a single crystal body containing alumina (Al₂O₃) as a main component but in a non-claimed example the light-transmissive cover plate 1 is able to be made by bonding a single crystal body to other transparent substrate. In this case, it is preferable that the second main surface 1B of the light-transmissive cover plate 1 is made of a single crystal body.

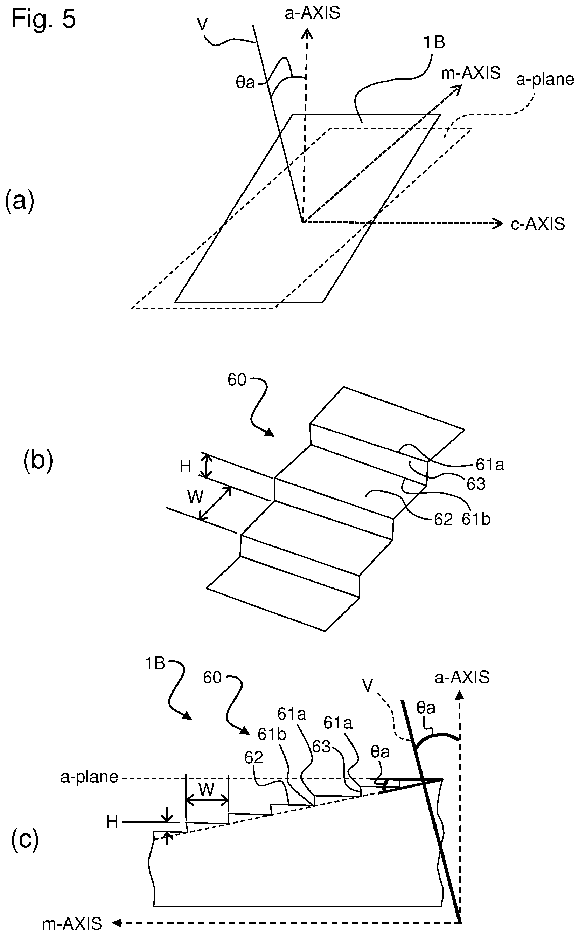

Figs. 5A to 5C are views describing the second main surface 1B, Fig. 5A is a conceptual view describing an inclination direction of the second main surface 1B, Fig. 5B is a perspective view schematically illustrating the second main surface 1B by enlarging a portion thereof, and Fig. 5C illustrates a cross section in which the light-transmissive cover plate 1 is cut by a plane perpendicular to an m-plane (plane in parallel with an m-axis) in sapphire.

The light-transmissive cover plate 1 is made of a single crystal body containing alumina (Al₂O₃) as a main component and has a step-terrace structure 60 in at least a portion of the second main surface 1B. The single crystal body containing alumina (Al₂O₃) as a main component is generally referred to as sapphire, is hardly damaged compared to strengthened glass or the like, and also hardly broken. In the present specification, the single crystal body containing alumina (Al₂O₃) as a main component is referred to as sapphire. When alumina is contained as a "main component" in the present specification, specifically, this means that alumina is contained by the amount of at least 50% by mass and preferably 70% by mass. The purity (content) of Al₂O₃ of the light-transmissive cover plate 1 is preferably 99% by mass or more in terms of being hardly damaged and suppressing breakage or fragments. In the present specification, the first main surface 1A has a step-terrace structure (not-illustrated) which is the same as the step-terrace structure 60 of the second main surface 1B.

The electronic apparatus 100 is a portable electronic apparatus which is so-called smart phone terminal. The single crystal body containing alumina (Al₂O₃) as a main component is generally referred to as sapphire, is hardly damaged compared to strengthened glass or the like, and also hardly broken.

The step-terrace structure 60 has steps. For example, the step-terrace structure 60 has a horizontal terrace portion 62 and a step portion 63 approximately perpendicular to the terrace portion 62. An upper ridge 61a and a lower ridge 61b are formed at the boundary of the terrace portion 62 and the step portion 63. It is desirable that the step-terrace structure 60 be continuously formed across the entirety of the second main surface 1B, but the step terrace structure may be partially formed. In a non-claimed example, a step height H of the step-terrace structure 60 is approximately 5x10⁻¹⁰ m and a terrace width W of the step-terrace structure 60 is approximately 2x10⁻⁷ m.

The second main surface 1B of a non-claimed example is a plane inclined from an a-plane of sapphire (11-20) plane, in sapphire and an inclined angle θₐ is approximately 0.5°. More specifically, in the second main surface 1B, a virtual line V perpendicular to the second main surface 1B is inclined with respect to an m-axis in sapphire. In addition, the second main surface 1B as a reference of the inclined angle in the present specification corresponds to a virtual plane containing a plurality of lower ridges 61b. As shown in Fig. 5B, the inclined angle θₐ corresponds to an angle formed by a straight line connecting the plurality of lower ridges 61b and the a-plane of sapphire (11-20) plane, in sapphire in the cross section of the second main surface 1B. In case the second main surface 1B is inclined with respect to a plane in the single crystal body that contains alumina (Al₂O₃) as a main component and the virtual line V is inclined with respect to the a plane, the step-terrace structure is easy to formed and the height and the width of which is stable.

In case the second main surface 1B is inclined with respect to a plane in the single crystal body that contains alumina (Al₂O₃) as a main component and the virtual line V is inclined with respect to the m-axis, the step-terrace structure is easy to form and the height and the width of which is stable.

The step-terrace structure 60 is a structure generated due to the fact that the second main surface 1B of the light-transmissive cover plate 1 is shifted from a crystal surface (the a-plane in the present embodiment) of sapphire in the light-transmissive cover plate 1 and is configured such that atoms in the vicinity of the second main surface 1B of the light-transmissive cover plate 1 are arranged in a form of steps according to an actual crystal structure. For example, the light-transmissive cover plate 1 having the step-terrace structure 60 can be formed by polishing sapphire by mechanical polishing or chemical mechanical polishing (so-called CMP), forming a precursor of the light-transmissive cover plate 1, performing a heat treatment on the precursor at a temperature of approximately 500°C to 1500°C, and by rearranging atoms on the surface of the precursor according to the crystal structure.

The degree of the inclined angle and the inclination direction of the second main surface 1B with respect to the sapphire can be measured by using a crystal orientation measuring device utilizing the X-ray diffraction method, or the like. In the crystal orientation measuring device, the light-transmissive cover plate 1 is placed such that the second main surface 1B is set at a predetermined position with a predetermined angle, the light-transmissive cover plate 1 is then irradiated with an X-ray to measure a so-called X-ray diffraction intensity, which represents the state of the crystal lattice of the single crystal of the light-transmissive cover plate 1, and based on the X-ray diffraction intensity, the degree of the inclined angle and the inclination direction of the second main surface 1B with respect to the sapphire can be measured. This measurement can be made by using, for example, an automated X-ray crystal orientation measuring device (model: 2991F2) manufactured by Rigaku Corporation, or the like.

The details of the step-terrace structure 60 such as the degree of the step height H or the terrace width W of the step-terrace structure 60 are changed according to the inclination direction, the magnitude of the inclined angle, conditions of the heat treatment, and the like of the second main surface 1B with respect to the crystal structure. That is, the details of the step-terrace structure 60 such as the degree of the step height H or the terrace width W of the step-terrace structure 60 can be adjusted by changing the inclination direction or the magnitude of the inclined angle, and the conditions of the heat treatment of the second main surface 1B with respect to the crystal structure.

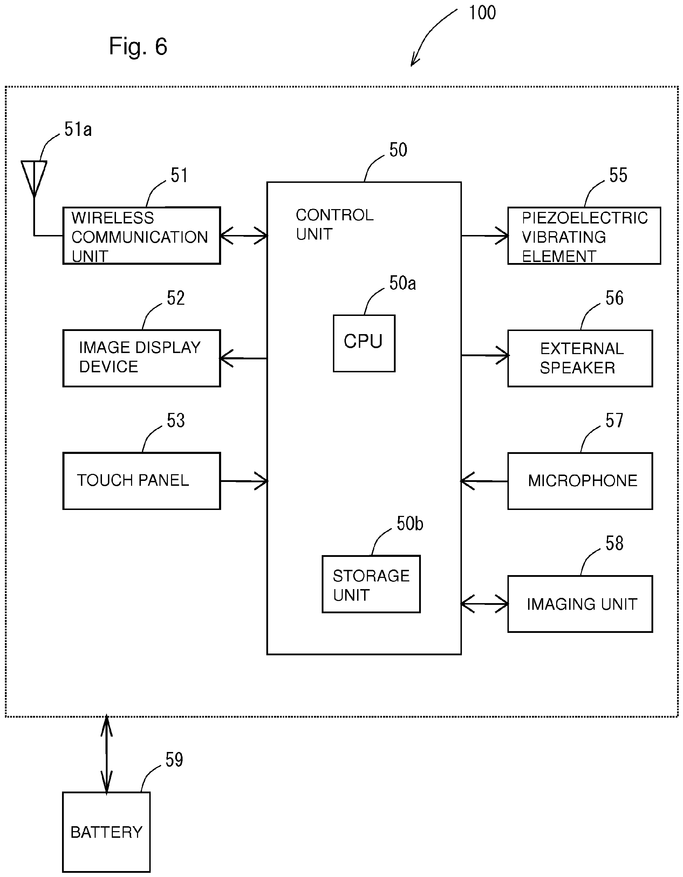

Fig. 6 is a block diagram illustrating an electric configuration of the electronic apparatus 100. As illustrated in Fig. 6, the electronic apparatus 100 includes a control unit 50, a wireless communication unit 51, an image display device 52, a touch panel 53, a piezoelectric vibrating element 55, an external speaker 56, a microphone 57, an imaging unit 58, and a battery 59, and these constituent elements are accommodated in the apparatus case 3.

The control unit 50 includes a CPU 50a (also illustrated in Fig. 4) and a storage unit 50b and manages overall operations of the electronic apparatus 100 by controlling other configuration elements of the electronic apparatus 100. The storage unit 50b is configured of a ROM and a RAM. Various functional blocks are formed in the control unit 50 by the CPU 50a executing various programs in the storage unit 50b. The control unit 50 receives a large amount of diverse information from the respective constituent elements and performs processing (information processing) on the information in a relatively short time. The CPU 50a generates a relatively large amount of heat during the information processing. When the heat emitted from the CPU 50a remains in the apparatus case 3, the operation of the CPU 50a becomes slow, operation failure of the CPU 50a occurs, or operation failure of other constituent elements of respective units of the apparatus case 3 occurs in some cases because the temperature in the apparatus case 3 is increased.

The thermal conductivity of the light-transmissive cover plate 1 made of sapphire is approximately 42 W/m·K and is greater than that of quartz glass or the like whose thermal conductivity is 1 W/m·K. Accordingly, the heat emitted from the CPU 50a can be effectively released to the outside the apparatus case 3 through the light-transmissive cover plate 1 in the electronic apparatus 100. Since the light-transmissive cover plate 1 has the step-terrace structure 60 as described above, the surface area is larger than that in a case where the second main surface 1B has, for example, a simple planar shape. That is, in the light-transmissive cover plate 1, since the surface area of the second main surface 1B which is an emission surface of the heat is large, the amount of heat released from the light-transmissive cover plate 1 per unit time is greater than that in a case where the second main surface 1B has, for example, a simple planar shape. In the electronic apparatus 100 including the light-transmissive cover plate 1, since the heat emitted from the CPU 50a is quickly released to the outside the apparatus case 3, the increase in temperature of the apparatus case 3 is suppressed and the operation failure of the CPU 50a and another constituent element is also suppressed. In addition, since the hardness of the light-transmissive cover plate 1 made of sapphire is extremely high, the light-transmissive cover plate 1 is hardly damaged and broken.

Moreover, since the light-transmissive cover plate 1 has the step-terrace structure 60, adhesion of fingerprint stains due to sebum of the user's finger is also suppressed when the second main surface 1B of the light-transmissive cover plate 1 is operated by the user using a finger or the like. More specifically, since the light-transmissive cover plate 1 has fine unevenness like the step-terrace structure 60, stains of the user's sebum are easily dispersed along, for example, the lower ridge 61b of the unevenness. Consequently, even in a case where the user operates the second main surface 1B of the light-transmissive cover plate 1 using a finger or the like, the sebum attached to the fingerprint is quickly dispersed on the second main surface 1B. In this manner, in the light-transmissive cover plate 1, so-called fingerprint stains which are conspicuous enough to be visually recognized because the sebum partially remains can be suppressed.

For realizing relatively high heat dissipation and reliably preventing attachment of the fingerprint stains, the terrace width is 10 times to 1000 times the step height of the step-terrace structure. The step height of the step-terrace structure is in the range of 1x10⁻¹⁰ m to 1x10⁻⁸ m. Further, the terrace width of the step-terrace structure is in the range of 1x10⁻⁹ m to 1x10⁻⁷ m.

As described above, the light-transmissive cover plate 1 can be formed by grinding and polishing the surface of sapphire, forming a substrate member (precursor of the light-transmissive cover plate 1) having a principal surface inclined from the a-plane of the sapphire (11-20) plane, in the sapphire by approximately 0.5°, and by performing a heat treatment on the precursor.

In regard to the polishing, as first polishing, a copper plate is used as a polishing pad and mechanical polishing using diamond abrasive grains having a grain diameter of approximately 1 µm to 3 µm as abrasive grains for polishing is performed, and then chemical mechanical polishing (so-called CMP) using colloidal silica abrasive grains having a grain diameter of approximately 20 µm to 80 µm as abrasive grains for polishing may be performed. A substrate member (precursor of the light-transmissive cover plate 1) which has a principal surface approximately parallel to the a-plane of a sapphire crystal and in which the virtual line V perpendicular to the principal surface is inclined with respect to the m-axis in the sapphire may be formed by performing these two stages of polishing. In the heat treatment, the substrate member formed through the polishing may be subjected to the heat treatment at 1000°C for 3 hours using a heat treatment device. By such a heat treatment, the atoms on the surface of the substrate member (precursor of the light-transmissive cover plate 1) are rearranged according to the crystal structure and a light-transmissive cover plate 1A having the step-terrace structure 60 can be formed. The inclined angle θ_{A} from the a-plane is less than 1.5° in order to stably form the step-terrace structure 60 having a step height of 1x10⁻¹⁰ m to 1x10⁻⁸ m and a terrace width of 1x10⁻⁹ m to 1x10⁻⁷ m by performing the heat treatment.

The second main surface 1B of the first embodiment is a plane inclined from the a-plane of the sapphire (11-20) plane, in the sapphire and the virtual line V perpendicular to the second main surface 1B is inclined with respect to the m-axis in the sapphire, but the inclination direction of the principal surface of the sapphire is not particularly limited. For example, the second main surface 1B is a plane inclined from the a-plane in the sapphire, the virtual line V perpendicular to the second main surface 1B may be inclined with respect to a c-axis in the sapphire, and the inclination direction is not particularly limited.

Further, in the above-described two embodiments, the second main surface 1B is inclined from the a-plane of the sapphire (11-20) plane, in the sapphire by 0.5°, but may be a plane inclined from a c-plane of sapphire (0001) plane, in the sapphire and the magnitude of the inclined angle is not particularly limited. However, in terms of capable of stably forming the step-terrace structure by the heat treatment, it is preferable that an inclined angle θ_{C} from the c-plane be less than 1.5°. In addition, even in a case where the second main surface 1B is a plane inclined from the c-plane of the sapphire (0001) plane, in the sapphire, the inclination direction is not particularly limited. For example, the virtual line V perpendicular to the second main surface 1B may be inclined with respect to an a-axis in the sapphire or may be inclined with respect to the m-axis, which is not particularly limited. Moreover, the second main surface 1B may be a plane inclined from an r-plane of the sapphire (01-12) plane, in the sapphire, and the magnitude of the inclined angle and the inclination direction are not particularly limited.

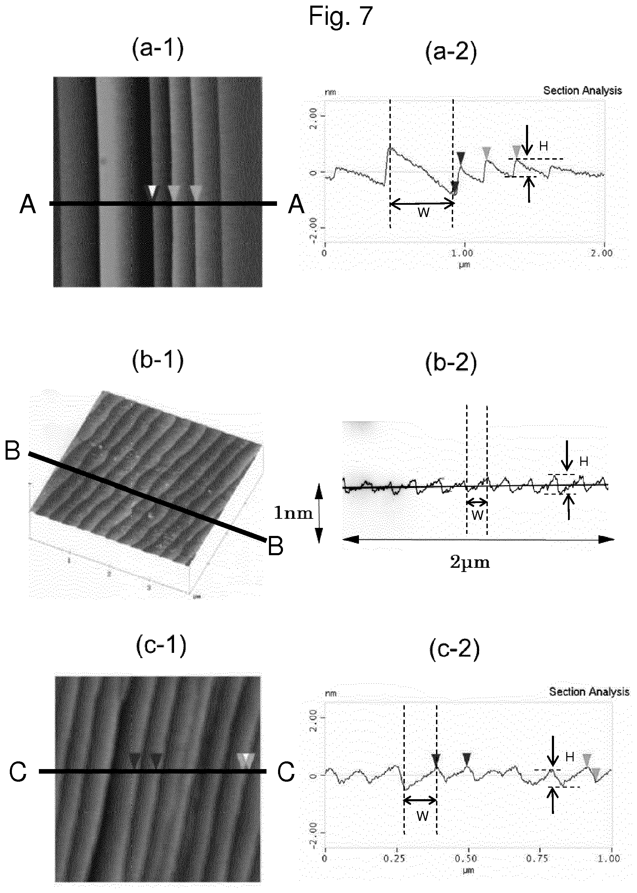

Fig. 7A illustrates image data of the surface profile measured by an atomic force microscope on the surface of the substrate in which the second main surface 1B is inclined from the a-plane in the sapphire by 0.3° and the virtual line V perpendicular to the second main surface 1B is inclined with respect to the c-axis (in the direction toward the c-axis) in the sapphire. The shade of the image represents the depth from the surface and a dark portion is positioned deep from the surface. Fig. 7D illustrates a cross-sectional shape along the straight line illustrated in Fig. 7A. Fig. 7B illustrates image data of the surface profile measured by the atomic force microscope on the surface of the substrate in which the second main surface 1B is inclined from the c-plane in the sapphire by 0.3° and the virtual line V perpendicular to the second main surface 1B is inclined with respect to the a-axis in the sapphire. Fig. 7E illustrates a cross-sectional shape along the straight line illustrated in Fig. 7B. Fig. 7C illustrates image data of the surface profile measured by the atomic force microscope on the surface of the substrate in which the second main surface 1B is inclined from the r-plane in the sapphire by 0.4° and the virtual line V perpendicular to the second main surface 1B is inclined with respect to the c-axis in the sapphire. Fig. 7F illustrates a cross-sectional shape along the straight line illustrated in Fig. 7C. In all examples illustrated in Figs. 7A to 7F, the terrace width W and the step height H are partially different from one another, but the average terrace width W is approximately 1x10⁻⁸ m and the average step height H is approximately 1x10⁻⁹ m.

The casing 2 constitutes the peripheral edge of the front surface, the side surface, and the back surface of the electronic apparatus 100. In the present embodiment, the casing 2 is formed of a polycarbonate resin, but a material is not particularly limited as long as the material is a member which covers the electronic apparatus. For example, a material which is the same as that of the light-transmissive cover plate 1 may be used.

The image display device 52 is included in the inside of the electronic apparatus 100 as described above. The image display device 52 is controlled by the control unit 50 described below and displays image information indicating characters, symbols, and drawings on the image display surface 52a.

The image display device 52 is a so-called liquid crystal display panel, and has a backlight unit and a liquid crystal layer which are not illustrated in the drawings. As an LED lamp of the backlight unit, an LED lamp emitting white light, in which a luminescent material is mainly combined to a blue LED element, is used. The image information displayed on the image display surface 52a of the image display device 52 is formed by white light, which is emitted from an LED lamp of the backlight unit, being partially colored by passing through the liquid crystal layer included in the image display device 52. That is, while the white light emitted from the LED lamp passes through the liquid crystal layer, the color of the transmitted light is changed by limiting a wavelength range of the light being transmitted for each portion and the image information indicating characters, symbols, and drawings having various colors and shapes is formed on the image display surface 52a. The light indicating the image information formed on the image display surface 52a in this manner is incident from the first main surface 1A of the light-transmissive cover plate 1, emits from the second main surface 1B, and enters eyes of an operator (user) of the electronic apparatus 100, and the operator recognizes the characters, the symbols, and the drawings indicated by the image information.

As illustrated in Fig. 3, a speaker hole 20 and a microphone hole 21 are formed on a back surface 101 of the electronic apparatus 100, that is, the back surface of the apparatus case 3. Further, an imaging lens 58a including an imaging unit 58 described below is exposed from the back surface 101 of the electronic apparatus 100.

The wireless communication unit 51 receives a signal from a communication device such as a web server connected to the Internet or a mobile phone different from the electronic apparatus 100 using an antenna 51a via a base station. The wireless communication unit 51 performs an amplification process and down conversion on the received signal and outputs the signal to the control unit 50. The control unit 50 performs demodulation processing or the like on the input received signal and acquires a sound signal indicating a voice or music included in the received signal. Further, the wireless communication unit 51 performs up-converting and the amplification process on a transmission signal including a sound signal or the like generated in the control unit 50, and transmits the transmission signal after the process from the antenna 51a in a wireless manner. The transmission signal from the antenna 51a is received in a communication device connected to the Internet or a mobile phone different from the electronic apparatus 100 via the base station.

The image display device 52 is, for example, a liquid crystal image display device as described above and displays various pieces of information such as characters, signals, and drawings on the image display surface 52a by being controlled by the control unit 50. The light indicating image information displayed in the image display device 52 passes through the light-transmissive cover plate 1 and enters eyes of a user (operator) of the electronic apparatus 100, and accordingly the information can be recognized by the user of the electronic apparatus 100.

The touch panel 53 is, for example, a projection type electrostatic capacitance touch panel and detects an operation of the user with respect to the second main surface 1B of the light-transmissive cover plate 1. The touch panel 53 is attached to the first main surface 1A side in the light-transmissive cover plate 1 and includes two sheets each having a sensing electrode pattern which are arranged so as to face each other. Two sheets of sensing electrode pattern are bonded to each other using a transparent adhesive sheet.

A plurality of long and narrow X electrodes that extend along an X-axis direction (for example, a lateral direction of the electronic apparatus 100) and are arranged in parallel with each other are formed on one sensing electrode pattern sheet. A plurality of long and narrow Y electrodes which respectively extend along a Y-axis direction (for example, a vertical direction of the electronic apparatus 100) and are arranged in parallel with each other are formed in the other sensing electrode pattern sheet. When a finger of the user is touched on the second main surface 1B of the light-transmissive cover plate 1, the electrostatic capacitance between an X electrode and a Y electrode positioned below the touched portion is changed so that the operation on the second main surface 1B of the light-transmissive cover plate 1 in the touch panel 53 is detected. The change in the electrostatic capacitance between the X electrode and the Y electrode, which is generated in the touch panel 53, is transmitted to the control unit 50, and the control unit 50 specifies the content of the operation performed on the second main surface 1B of the light-transmissive cover plate 1 based on the change in the electrostatic capacitance and performs an operation according to the specified contents.

The light-transmissive cover plate 1 shown in Fig. 5 is such that a short-side direction of the rectangular shape is parallel to the c-axis in the sapphire. In the single crystal body of the light-transmissive cover plate 1, the step-terrace structure 60 is formed such that the upper ridge 61a and the lower ridge 61b extend in the short-side direction. The short-side direction of the light-transmissive cover plate 1 and a long-side direction thereof, which is orthogonal to the short-side direction, serve as references for the directions of arrangements of the pixels of the image display device 52 formed for example of a liquid-crystal display panel, and the electrodes of the touch panel 53. The step-terrace structure 60 affects partial diffraction of the light in the light-transmissive cover plate 1, and also affects partial electrostatic capacity of the light-transmissive cover plate 1, and therefore, the detection sensitivity of the touch panel and the like. When the step-terrace structure 60 is formed such that the upper ridge 61a and the lower ridge 61b extend in the short-side direction or the long side direction, the display conditions of the image display device 52 and the detection conditions of the touch panel 53 can be easily matched. By changing these conditions, it is possible to relatively easily improve the detection sensitivity of the touch panel 53 and improve the visibility of an image displayed by the image display device 52, for example, as compared to a case where the second main surface 1B of the light-transmissive cover plate 1 is just a flat surface.

The piezoelectric vibrating element 55 is an element for transmitting a reception sound to the user of the electronic apparatus 100. The piezoelectric vibrating element 55 is vibrated by a driving voltage applied from the control unit 50. The control unit 50 generates a driving voltage based on a sound signal indicating the reception sound and applies the driving voltage to the piezoelectric vibrating element 55. The piezoelectric vibrating element 55 is vibrated by the control unit 50 based on the sound signal indicating the reception sound and thus the reception sound is transmitted to the user of the electronic apparatus 100. In this manner, the control unit 50 functions as a driving unit allowing the piezoelectric vibrating element 55 to vibrate based on the sound signal. The piezoelectric vibrating element 55 will be described below in detail.

The external speaker 56 outputs the electric sound signal from the control unit 50 by converting the signal into a sound. The sound output from the external speaker 56 is output to the outside from speaker holes 20 provided on the back surface 101 of the electronic apparatus 100.

The microphone 57 outputs the sound input from the outside of the electronic apparatus 100 to the control unit 50 by converting the electric sound signal into a sound. The sound from the outside of the electronic apparatus 100 is incorporated in the electronic apparatus 100 from microphone holes 21 provided on the back surface 101 of the electronic apparatus 100 and is input to the microphone 57.

The imaging unit 58 is configured of the imaging lens 58a, an imaging element, and the like, and images a still image and a moving image based on the control by the control unit 50.

The battery 59 outputs a power source of the electronic apparatus 100. The power source output from the battery 59 is supplied with respect to respective electronic components contained in the control unit 50 or the wireless communication unit 51 included in the electronic apparatus 100.

### <Details of piezoelectric vibrating element>

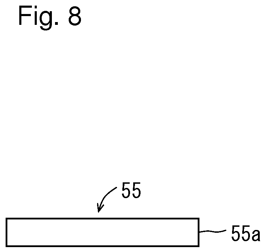

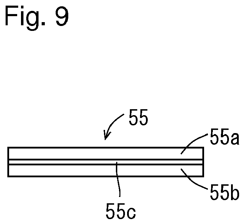

Figs. 8 and 9 are respectively a top view and a side view illustrating a structure of the piezoelectric vibrating element 55. As illustrated in Figs. 8 and 9, the piezoelectric vibrating element 55 has a long shape in one direction. Specifically, the piezoelectric vibrating element 55 has a long and narrow rectangular plate shape in a plan view. The piezoelectric vibrating element 55 has, for example, a bimorph structure and includes a first piezoelectric ceramic plate 55a and a second piezoelectric ceramic plate 55b which are attached to each other through a sim material 55c.

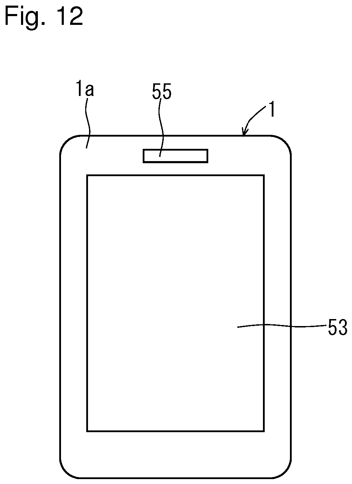

In the piezoelectric vibrating element 55, when a positive voltage is applied to the first piezoelectric ceramic plate 55a and a negative voltage is applied to the second piezoelectric ceramic plate 55b, the first piezoelectric ceramic plate 55a extends along the longitudinal direction and the second piezoelectric ceramic plate 55b contracts along the longitudinal direction. Accordingly, as illustrated in Fig. 12, the piezoelectric vibrating element 55 is bent into a convex shape with the first piezoelectric ceramic plate 55a being outside.

In contrast, in the piezoelectric vibrating element 55, when a negative voltage is applied to the first piezoelectric ceramic plate 55a and a positive voltage is applied to the second piezoelectric ceramic plate 55b, the first piezoelectric ceramic plate 55a contracts along the longitudinal direction and the second piezoelectric ceramic plate 55b extends along the longitudinal direction. Accordingly, as illustrated in Fig. 12, the piezoelectric vibrating element 55 is bent into a convex shape with the second piezoelectric ceramic plate 55b being outside.

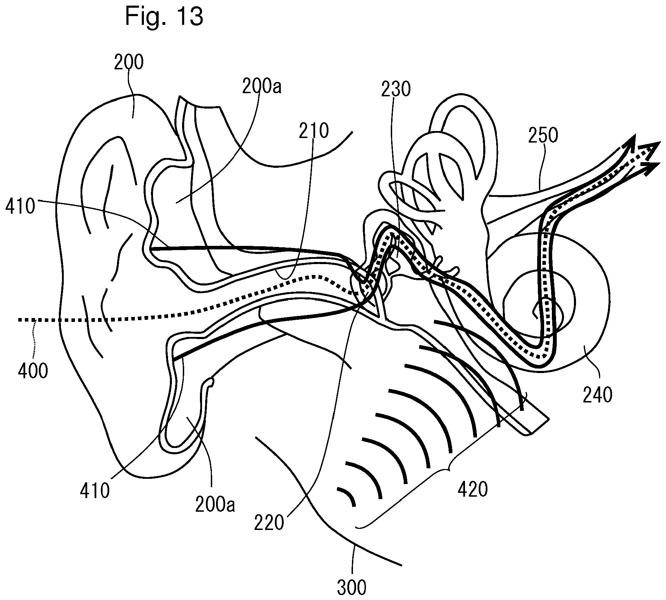

The piezoelectric vibrating element 55 is bent and vibrates by alternatively taking the state of Fig. 12 and the state of Fig. 13. The control unit 50 allows the piezoelectric vibrating element 55 to be bent and vibrate by applying an AC voltage in which the positive voltage and the negative voltage alternatively appear at an area between the first piezoelectric ceramic plate 55a and the second piezoelectric ceramic plate 55b.

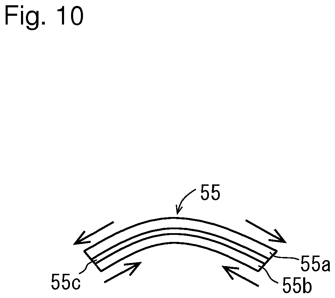

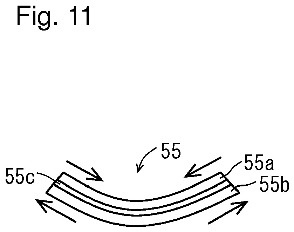

In addition, only one structure made of the first piezoelectric ceramic plate 55a and the second piezoelectric ceramic plate 55b which are bonded to each other by interposing the sim material 55c therebetween is provided in the piezoelectric vibrating element 55 illustrated in Figs. 9 to 11, but a plurality of the structures may be laminated to each other.

### <Arrangement position of piezoelectric vibrating element>

Fig. 12 is a plan view when the light-transmissive cover plate 1 is seen from the first main surface 1A side. The piezoelectric vibrating element 55 is attached to the first main surface 1A of the light-transmissive cover plate 1 using an adhesive such as a double-sided tape. The piezoelectric vibrating element 55 is arranged in a position which is not overlapped with the image display device 52 and the touch panel 53 when the light-transmissive cover plate 1 is seen from the first main surface 1A side in a plan view in the first main surface 1A of the light-transmissive cover plate 1.

### <Regarding generation of reception sound due to vibration of piezoelectric vibrating element>

In the present embodiment, an air conduction sound and a conduction sound are transmitted to the user from the light-transmissive cover plate 1 by the piezoelectric vibrating element 55 allowing the light-transmissive cover plate 1 to vibrate. That is, the vibration of the piezoelectric vibrating element 55 is transmitted to the light-transmissive cover plate 1 so that the air conduction sound and the conduction sound are transmitted to the user from the light-transmissive cover plate 1.

Here, the term "air conduction sound" means a sound recognized in a human brain by the vibration of an eardrum due to a sound wave (air vibration) which enters an external auditory meatus hole (a so-called "ear hole"). On the other hand, the term "conduction sound" is a sound recognized in a human brain by the vibration of the eardrum due to the vibration of an auricle transmitted to the eardrum after the auricle is vibrated. Hereinafter, the air conduction sound and the conduction sound will be described in detail.

Fig. 13 is a view for describing the air conduction sound and the conduction sound. Fig. 13 illustrates a structure of an ear of the user of the electronic apparatus 100. In Fig. 13, a wavy line 400 indicates a conduction path of a sound signal (sound information) while the air conduction sound is recognized in the brain and a solid line 410 indicates the conduction path of the sound signal while the conduction sound is recognized in the brain.

When the piezoelectric vibrating element 55 mounted to the light-transmissive cover plate 1 vibrates based on the electric sound signal indicating the reception sound, the light-transmissive cover plate 1 vibrates and a sound wave is output from the light-transmissive cover plate 1. When the user moves the light-transmissive cover plate 1 of the electronic apparatus 100 close to an auricle 200 of the user by holding the electronic apparatus 100 in a hand or the light-transmissive cover plate 1 of the electronic apparatus 100 is set against the auricle 200 of the user, the sound wave output from the light-transmissive cover plate 1 enters an external auditory meatus hole 210. The sound wave from the light-transmissive cover plate 1 advances in the external auditory meatus hole 210 and allows the eardrum 220 to vibrate. The vibration of the eardrum 220 is transmitted to au auditory ossicle 230 and the auditory ossicle 230 vibrates. In addition, the vibration of the auditory ossicle 230 is transmitted to a cochlea 240 and is converted into an electrical signal in the cochlea 240. The electrical signal is transmitted to the brain by passing through an acoustic nerve 250 and the reception sound is recognized in the brain. In this manner, the air conduction sound is transmitted from the light-transmissive cover plate 1 to the user.

Further, when the user sets the light-transmissive cover plate 1 of the electronic apparatus 100 against the auricle 200 of the user by holding the electronic apparatus 100 in a hand, the auricle 200 is vibrated by the light-transmissive cover plate 1 which is vibrated by the piezoelectric vibrating element 55. The vibration of the auricle 200 is transmitted to the eardrum 220, and thus the eardrum 220 vibrates. The vibration of the eardrum 220 is transmitted to the auditory ossicle 230, and thus the auditory ossicle 230 vibrates. In addition, the vibration of the auditory ossicle 230 is transmitted to the cochlea 240 and is converted into an electrical signal in the cochlea 240. The electrical signal is transmitted to the brain by passing through the acoustic nerve 250 and the reception sound is recognized in the brain. In this manner, the conduction sound is transmitted from the light-transmissive cover plate 1 to the user. Fig. 15 illustrates an auricular cartilage 200a in the inside of the auricle 200.

In addition, the conduction sound herein is different from a bone conduction sound (also referred to as a "bone conduction sound"). The bone conduction sound is a sound recognized in a human brain by the vibration of the skull and direct stimulation of the inner ear such as the cochlea caused by the vibration of the skull. In Fig. 15, in a case of vibrating the jawbone 300, the transmission path of the sound signal while the bone conduction sound is recognized in the brain is indicated with a plurality of arcs 420.

In this manner, in the electronic apparatus 100 according to the present embodiment of the present invention, the air conduction sound and the conduction sound can be transmitted from the light-transmissive cover plate 1 to the user of the electronic apparatus 100 by allowing the light-transmissive cover plate 1 of the front surface to appropriately vibrates through the piezoelectric vibrating element 55. The structure of the piezoelectric vibrating element 55 according to the present embodiment is designed such that the air conduction sound and the conduction sound can be appropriately transmitted to the user. Various advantages are generated by constituting the electronic apparatus 100 such that the air conduction sound and the conduction sound can be transmitted to the user.

For example, since the user can hear a sound when the user sets the light-transmissive cover plate 1 against an ear, the communication using a telephone can be performed without concerning the position of the electronic apparatus 100 set against an ear so much.

In addition, in a case where there is a large amount of ambient noise, it is possible to increase the volume of the conduction sound and to make difficult for the ambient noise to be heard by the user by strongly pressing the ear against the light-transmissive cover plate 1. Accordingly, the user can appropriately perform communication using a telephone even when there is a large amount of the ambient noise.

In addition, even in a state in which earplugs or earphones are fixed to the ears of the user, the reception sound from the electronic apparatus 100 can be recognized by putting the light-transmissive cover plate 1 against the ear (more specifically the auricle). Further, even in the state in which headphones are fixed to the ears of the user, the reception sound from the electronic apparatus 100 can be recognized by setting the light-transmissive cover plate 1 against the headphones.

### <Regarding holes of ear piece (holes for receiver)>

In electronic apparatus such as a mobile phone, holes of the ear piece are made on the light-transmissive cover plate 1 of the front surface in some cases for extracting a sound output from a receiver (speaker for receiving a voice) provided in the inside of the electronic apparatus to the outside the electronic apparatus.

In the electronic apparatus 100 according to the present embodiment, since the reception sound is generated by the vibration of the light-transmissive cover plate 1, the reception sound can be appropriately transmitted to the user even through there are no holes in the ear piece of the electronic apparatus 100. The light-transmissive cover plate 1 is a single crystal body which contains alumina (Al₂O₃) as a main component, and extremely hard when compared to strengthened glass or the like. In addition, resistance to various chemicals is also significantly high. When the single crystal body which contains alumina (Al₂O₃) as a main component is processed to perform processing of opening holes of the ear piece, production cost becomes relatively high because an expensive production apparatus such as a laser processing apparatus becomes necessary or the time required for the processing becomes longer. Since the light-transmissive cover plate 1 of the present embodiment has no holes in the ear piece, the cost for the hole processing is not necessary and the production cost of the electronic apparatus 100 is low. Further, since the light-transmissive cover plate 1 has no holes in the ear piece, the strength of the light-transmissive cover plate 1 is maintained to be relatively high. Furthermore, in the present embodiment, since there are no holes of the ear piece on the surface of the electronic apparatus 100, problems of water or dust entering the holes of the ear piece are not generated. Therefore, since a water-proof structure or a dust-proof structure for solving the above-described problem becomes unnecessary in the electronic apparatus 100, further reduction in the cost of the electronic apparatus 100 can be realized.

Further, in the above-described example, a case of a mobile phone to which the present invention is applied is described as an example, but the present invention can be applied to an electronic apparatus other than the mobile phone. For example, the present invention can be applied to a game machine, a laptop computer, a portable navigation system, and the like. In addition, the present invention is not limited to the above-described embodiments, and various modifications and changes may be made in the range not departing from the scope of the present invention.

### Reference Signs List.

- 1: light-transmissive cover member
- 1A: first main surface
- 1B: second main surface
- 50: control unit
- 52: image display device
- 52a: image display surface
- 53: touch panel
- 55: piezoelectric vibrating element
- 100: electronic apparatus

## Claims

1. A light-transmissive cover plate (1) for a portable electronic apparatus (100),
wherein the light-transmissive cover plate (1) is made of a single crystal body that contains alumina (Al₂O₃) as a main component,
wherein the light-transmissive cover plate (1) has a step-terrace structure (60) continuously formed across the entirety of a main surface (1B) or being partially formed,
wherein the step-terrace structure (60) has step heights (H) in the range of 1x10⁻¹⁰ m to 1x10⁻⁸ m,
**characterized in that**
the terrace widths (W) are in the range of 1x10⁻⁹ m to 1x10⁻⁷ m, being 10 times to 1000 times the step heights (H), and
the main surface (1B) is a plane inclined from an a-plane in the single crystal body and an inclined angle from the a-plane is less than 1.5°.

2. The light-transmissive cover plate (1) according to claim 1, wherein the main surface (1B) is inclined with respect to an m-axis in the single crystal body.

3. The light-transmissive cover plate (1) according to claim 1, wherein a virtual line (V) perpendicular to the main surface (1B) is inclined with respect to an c-axis in the single crystal body.

4. An electronic apparatus (100), comprising:
an image display device (52) that includes an image display surface (52a); and
the light-transmissive cover plate (1) according to claim 1, wherein the light-transmissive cover plate (1) includes a first main surface (1A) facing the image display surface (52a) and,
the main surface (1B) having the step-terrace structure is a second main surface (1B) positioned on the opposite side of the first main surface (1A).

5. The electronic apparatus (100) according to claim 4, wherein the second main surface (1B) is positioned such that a virtual line (V) perpendicular to the second main surface (1B) is inclined with respect to an m-axis in the single crystal body.

6. The electronic apparatus (100) according to claim 4, wherein the second main surface (1B) is positioned such that a virtual line (V) perpendicular to the second main surface (1B) is inclined with respect to an c-axis in the single crystal body.

7. The electronic apparatus (100) according to any one of claims 4 to 6,
further comprising a piezoelectric vibrating element (55) provided on the light-transmissive cover member (1).

8. The electronic apparatus (100) according to claim 7,
wherein the piezoelectric vibrating element (55) is vibrated by a driving voltage based on a sound signal.

9. The electronic apparatus (100) according to claim 7 or 8,
wherein the light-transmissive cover member (1) is a plate having a long rectangular shape in a plan view.

10. The electronic apparatus (100) according to any one of claims 7 to 9,
wherein the piezoelectric vibrating element (55) is arranged in a position which is not overlapped with the image display device (52).

11. The electronic apparatus (100) according to any one of claims 4 to 10,
wherein a touch panel (53) is attached to the first main surface (1A) of the light-transmissive cover plate (1).

## Patentansprüche

1. Lichtdurchlässige Abdeckplatte (1) für eine tragbare elektronische Vorrichtung (100),
wobei die lichtdurchlässige Abdeckplatte (1) aus einem Einkristallkörper hergestellt ist, der Aluminiumoxid (Al₂O₃) als eine Hauptkomponente enthält,
wobei die lichtdurchlässige Abdeckplatte (1) eine Stufen-Terrassen-Struktur (60) hat, die kontinuierlich über die Gesamtheit einer Hauptfläche (1B) ausgebildet ist oder teilweise ausgebildet ist,
wobei die Stufen-Terrassen-Struktur (60) Stufenhöhen (H) im Bereich von 1x10⁻¹⁰ m bis 1x10⁻⁸ m hat,
**dadurch gekennzeichnet, dass**
die Terrassenbreiten (W) im Bereich von 1x10⁻⁹ m bis 1x10⁻⁷ m liegen, wobei sie das 10- bis 1000-fache der Stufenhöhen (H) betragen, und
die Hauptfläche (1B) eine Ebene ist, die von einer a-Ebene in dem Einkristallkörper aus geneigt ist, und ein Neigungswinkel von der a-Ebene aus weniger als 1,5° beträgt.

2. Lichtdurchlässige Abdeckplatte (1) gemäß Anspruch 1, wobei die Hauptfläche (1B) in Bezug auf eine m-Achse im Einkristallkörper geneigt ist.

3. Lichtdurchlässige Abdeckplatte (1) gemäß Anspruch 1, wobei eine virtuelle Linie (V) senkrecht zu der Hauptfläche (1B) in Bezug auf eine c-Achse im Einkristallkörper geneigt ist.

4. Elektronische Vorrichtung (100), aufweisend:
eine Bildanzeigevorrichtung (52), die eine Bildanzeigefläche (52a) aufweist, und
die lichtdurchlässige Abdeckplatte (1) gemäß Anspruch 1, wobei die lichtdurchlässige Abdeckplatte (1) eine erste Hauptfläche (1A) aufweist, die der Bildanzeigefläche (52a) zugewandt ist, und
die Hauptfläche (1B), die die Stufen-Terrassen-Struktur hat, eine zweite Hauptfläche (1B) ist, die auf der gegenüberliegenden Seite der ersten Hauptfläche (1A) angeordnet ist.

5. Elektronische Vorrichtung (100) gemäß Anspruch 4, wobei die zweite Hauptfläche (1B) derart positioniert ist, dass eine virtuelle Linie (V) senkrecht zu der zweiten Hauptfläche (1B) in Bezug auf eine m-Achse im Einkristallkörper geneigt ist.

6. Elektronische Vorrichtung (100) gemäß Anspruch 4, wobei die zweite Hauptfläche (1B) derart positioniert ist, dass eine virtuelle Linie (V) senkrecht zu der zweiten Hauptfläche (1B) in Bezug auf eine c-Achse im Einkristallkörper geneigt ist.

7. Elektronische Vorrichtung (100) gemäß irgendeinem der Ansprüche 4 bis 6,
ferner aufweisend ein piezoelektrisches Schwingelement (55), das auf dem lichtdurchlässigen Abdeckelement (1) bereitgestellt ist.

8. Elektronische Vorrichtung (100) gemäß Anspruch 7,
wobei das piezoelektrische Schwingelement (55) durch eine Ansteuerspannung basierend auf einem Tonsignal in Schwingung versetzt wird.

9. Elektronische Vorrichtung (100) gemäß Anspruch 7 oder 8,
wobei das lichtdurchlässige Abdeckelement (1) eine Platte ist, die in einer Draufsicht eine lange rechteckige Form hat.

10. Elektronische Vorrichtung (100) gemäß irgendeinem der Ansprüche 7 bis 9,
wobei das piezoelektrische Schwingelement (55) in einer Position angeordnet ist, die nicht mit der Bildanzeigevorrichtung (52) überlappt ist.

11. Elektronische Vorrichtung (100) gemäß irgendeinem der Ansprüche 4 bis 10,
wobei an der ersten Hauptfläche (1A) der lichtdurchlässigen Abdeckplatte (1) ein Touchpanel (53) angebracht ist.

## Revendications

1. Plaque de couverture transmettant la lumière (1) pour un appareil électronique portable (100),
dans laquelle la plaque de couverture transmettant la lumière (1) est faite d'un corps monocristallin qui contient de l'alumine (Al₂O₃) comme un composant principal,
dans laquelle la plaque de couverture transmettant la lumière (1) a une structure étage-terrasse (60) formée de manière continue sur la totalité d'une surface principale (1B) ou étant partiellement formée,
dans laquelle la structure étage-terrasse (60) a des hauteurs d'étage (H) dans la gamme de 1x10⁻¹⁰ m à 1x10⁻⁸ m,
**caractérisée en ce que**
les largeurs de terrasse (W) sont dans la gamme de 1x10⁻⁹ m à 1x10⁻⁷ m, étant 10 fois à 1000 fois les hauteurs d'étage (H), et
la surface principale (1B) est un plan incliné à partir d'un plan a dans le corps monocristallin et un angle d'inclinaison à partir du plan a est inférieur à 1,5°.

2. Plaque de couverture transmettant la lumière (1) selon la revendication 1, dans laquelle la surface principale (1B) est inclinée par rapport à un axe m dans le corps monocristallin.

3. Plaque de couverture transmettant la lumière (1) selon la revendication 1, dans laquelle une ligne virtuelle (V) perpendiculaire à la surface principale (1B) est inclinée par rapport à un axe m dans le corps monocristallin.

4. Appareil électronique (100), comprenant :
un dispositif d'affichage d'image (52) qui comprend une surface d'affichage d'image (52a) ; et
la plaque de couverture transmettant la lumière (1) selon la revendication 1, dans laquelle la plaque de couverture transmettant la lumière (1) comprend une première surface principale (1A) faisant face à la surface d'affichage d'image (52a) et,
la surface principale (1B) ayant la structure étage-terrasse est une deuxième surface principale (1B) positionnée sur le côté opposé de la première surface principale (1A).

5. Appareil électronique (100) selon la revendication 4, dans lequel la deuxième surface principale (1B) est positionnée de telle sorte qu'une ligne virtuelle (V) perpendiculaire à la deuxième surface principale (1B) est inclinée par rapport à un axe m dans le corps monocristallin.

6. Appareil électronique (100) selon la revendication 4, dans lequel la deuxième surface principale (1B) est positionnée de telle sorte qu'une ligne virtuelle (V) perpendiculaire à la deuxième surface principale (1B) est inclinée par rapport à un axe c dans le corps monocristallin.

7. Appareil électronique (100) selon l'une quelconque des revendications 4 à 6,
comprenant en outre un élément piézoélectrique vibrant (55) prévu sur l'élément de couverture transmettant la lumière (1).

8. Appareil électronique (100) selon la revendication 7,
dans lequel l'élément piézoélectrique vibrant (55) est mis en vibration par une tension d'attaque basée sur un signal sonore.

9. Appareil électronique (100) selon la revendication 7 ou 8,
dans lequel l'élément de couverture transmettant la lumière (1) est une plaque ayant une forme rectangulaire longue dans une vue en plan.

10. Appareil électronique (100) selon l'une quelconque des revendications 7 à 9,
dans lequel l'élément piézoélectrique vibrant (55) est disposé dans une position qui ne chevauche pas le dispositif d'affichage d'image (52).

11. Appareil électronique (100) selon l'une quelconque des revendications 4 à 10,
dans lequel un panneau tactile (53) est fixé à la première surface principale (1A) de la plaque de couverture transmettant la lumière (1).
